# EUROPÄISCHE PATENTANMELDUNG

(11) **EP 1 316 381 A1**
(43) Veröffentlichungstag der Anmeldung: **04.06.2003**
(21) Anmeldenummer: 01128390.0
(22) Anmeldetag: 03.12.2001
(51) Int. Cl.: B23K 9/133, B65H 51/14

(54) **Drahtvorschubvorrichtung für Drahtschweissanlagen**

(71) Anmelder: Mechafin AG, 8954 Geroldswil (CH)
(72) Erfinder: Hess, Andreas, 6208 Oberkirch (CH)
(74) Vertreter: Blum, Rudolf Emil Ernst

(57) **Zusammenfassung**

Die Drahtvorschubvorrichtung besitzt zwei Antriebsrollen (5) und zwei Laufrollen (6), zwischen denen der Schweissdraht (4) geführt wird. Eine erste Antriebsrolle (5) mit Achse (9) wird direkt vom Motor (1) angetrieben, während eine zweite Antriebsrolle (5) mit Achse (7) über einen Zahnriemen (3) angetrieben wird. Der Zahnriemen (3) läuft auf Riemenrädern. Durch Verwendung des Zahnriemens (3) wird eine Antriebsverbindung erreicht, die wenig Vibrationen verursacht, relativ leicht ist und selten gewartet werden muss.

## Beschreibung

Die Erfindung bezieht sich auf eine Drahtvorschubvorrichtung für Drahtschweissanlagen, welche zum Antrieb des Schweissdrahtes mindestens zwei Rollenpaare mit zwei Rollen aufweist, zwischen welchen der Schweissdraht geführt ist.

Vorrichtungen dieser Art, wie sie z.B. in W0 98/26895 beschrieben sind, werden beim Drahtschweissen verwendet, um den Schweissdraht von der Spule abzuwickeln und dem Schweissbrenner zuzuführen. Die Vorrichtungen besitzen mindestens ein Rollenpaar, zwischen welchem der Draht geführt und angetrieben wird. Die Vorrichtung kann auch zwei oder mehr Rollenpaare aufweisen, wobei mehr Rollenpaare zusammen eine grössere Vorschubkraft auf den Draht ausüben können. Die meisten Geräte sind mit zwei Rollenpaaren ausgerüstet. Je zwei der Rollen sind als Druckrollen ausgeführt, zwei als Antriebsrollen. Die Antriebsrollen sind mit einem Motor über ein Ritzel antriebsverbunden. In der Praxis erweisen sich die bisher verwendeten Vorschubvorrichtungen bei der Herstellung als teuer und im Einsatz als unpräzise, vibrationsverursachend, schwer und wartungsbedürftig. Insbesondere für den Einsatz auf Roboter-Armen erweisen sich die konventionellen Vorrichtungen wegen ihres grossen Gewichts und der von ihnen verursachten Vibrationen als bedingt geeignet. Vibrationen können zudem die Bildung von Rost begünstigen (Vibrationsrost). Der Schweissdaht sollte keine Oel- oder Fett-Spuren aufweisen. Aus diesem Grund dürfen die Vorrichtungen im Bereich des Schweissdrahtes nicht geölt werden, was bei der konventionellen Bauweise zu starkem Verschleiss und Abrieb führt.

Es stellt sich daher die Aufgabe, eine Vorrichtung der eingangs genannten Art bereitzustellen, die diese Nachteile mindestens teilweise vermeidet. Diese Aufgabe wird von Anspruch 1 gelöst, indem die Antriebsverbindung zwischen der vom Motor angetriebenen Achse und mindestens einer Rollenachse über einen Riemen hergestellt wird. Dies hat den Vorteil, dass die Räderzahl reduziert werden kann, dass die Vorrichtung weniger Vibrationen verursacht, weil der Riemen ruhiger läuft als Zahnräder, und dass weniger Wartung erforderlich ist, weil der Aufbau mit Riemen weniger Abrieb erzeugt als der konventionelle Aufbau mit Ritzel und Zahnrädern.

Insbesondere, wenn eine der Rollenachsen vom Motor direkt angetrieben wird, kann der Aufbau gegenüber dem entsprechenden Aufbau mit Ritzel wesentlich kompakter und leichter gestaltet werden. Zusätzliche Präzision und bessere Kraftübertragung ist gegeben, wenn Riemen und Riemenräder eine Verzahnung aufweisen.

Weitere Vorteile und bevorzugte Ausführungsbeispiele ergeben sich aus den abhängigen Ansprüchen sowie aus der nun folgenden Beschreibung anhand der Figuren. Dabei zeigen:
Fig. 1 eine Drahtvorschubvorrichtung in einer Ausführung mit zwei Rollenpaaren (Seitenansicht),
Fig. 2 die Drahtvorschubvorrichtung von Figur 1 in Draufsicht,
Fig. 3 eine Drahtvorschubvorrichtung in einer Ausführung mit einer direkt angetriebenen Achse zusätzlich zu den Rollenachsen zwischen den Rollenpaaren,
Fig. 4 eine Drahtvorschubvorrichtung in einer Ausführung mit einer angetriebenen Achse zusätzlich zu den Rollenachsen, wobei der Riemen von zwei Seiten kontaktiert wird und dadurch Gegenbiegung erfährt,
Fig. 5 eine Drahtvorschubvorrichtung in einer Ausführung mit zwei Rollenpaaren und zwei Riemen, mit einer angetriebener Achse zusätzlich zu den Rollenachsen, seitlich der Rollenpaare,
Fig. 6 eine Drahtvorschubvorrichtung in einer Ausführung mit drei Rollenpaaren und drei Riemen,
Fig. 7 eine Drahtvorschubvorrichtung mit vier Rollenpaaren und drei Riemen, und
Fig. 8 eine Drahtvorschubvorrichtung mit einem die Achsen tragenden Gehäuse mit einer Trennwand zwischen Riemen und Rollen.

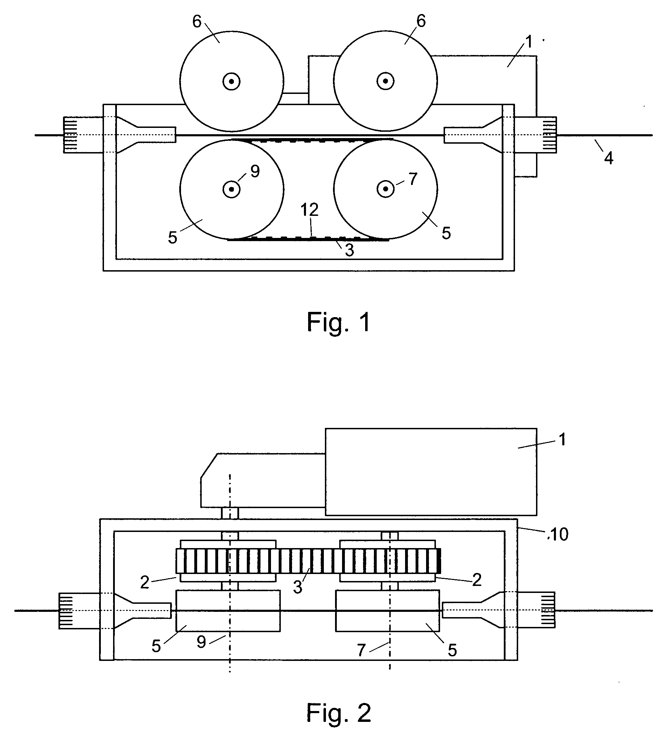

Eine mögliche Ausführung der erfindungsgemässen Vorrichtung ergibt sich aus Figuren 1 und 2. Sie besitzt zwei Rollenpaare zwischen denen der Schweissdraht 4 geführt ist. Jedes Rollenpaar besteht aus einer Antriebsrolle 5 und einer Lauf- bzw. Druckrolle 6. Eine erste Antriebsrolle 5 ist direkt mit einer vom Motor 1 angetriebenen Achse 9 verbunden. Eine zweite Antriebsrolle 5 ist mit der vom Motor 1 angetriebenen Achse 9 über einen auf Riemenscheiben bzw. Riemenrädern 2 laufenden Riemen 3 antriebsverbunden. Die Riemenräder 2 sind aus Aluminium oder einer Aluminiumlegierung gefertigt. Aluminium ist leicht, korrosionsbeständig und lässt sich gut bearbeiten. Aluminium als relativ weiches Material kann hier gut eingesetzt werden, weil Riemenräder mechanisch nicht stark beansprucht werden. Bei der dargestellten Ausführung weisen der Riemen 3 und die Riemenräder 2 eine ineinandergreifende Trapezverzahnung 12 auf. Der Riemen 3 besteht aus Polyurethan und ist durch Karbonfasern und/oder Metalleinlagen verfestigt.

Die Lauf- bzw. Druckrollen 6 sind als freilaufende Rollen ohne eigenen Antrieb ausgestaltet. Sie werden von einem (nicht gezeigten) Schwenkmechanismus gegen den Draht 4 und die Antriebsrollen 5 gedrückt. Ein entsprechender Mechanismus ist in W0 98/26895 dargestellt.

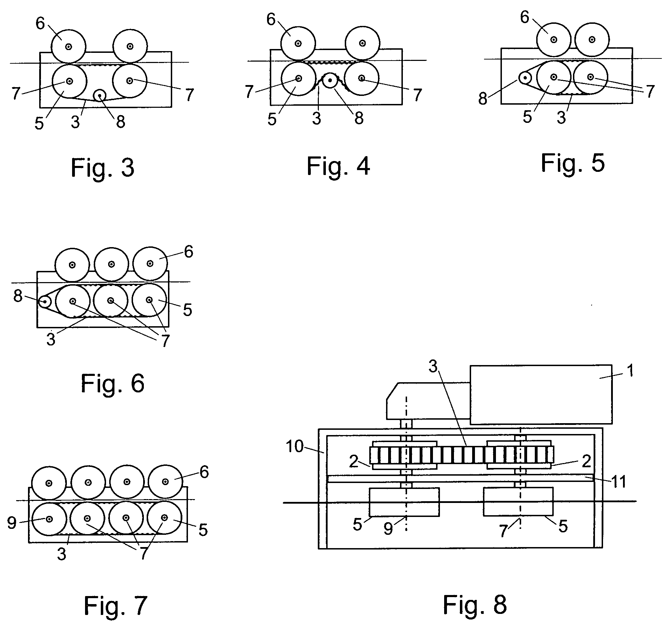

Die Ausführungsform von Figur 3 hat zwei Rollenpaare. Sie hat eine vom Motor direkt angetriebene Achse 8 zusätzlich zu den indirekt angetriebenen Rollenachsen 7. Diese zusätzliche vom Motor direkt angetriebene Achse 8 liegt zwischen den Rollenpaaren. Der Riemen 3 steht bei allen Achsen 7,8 über dieselbe Seite mit den jeweiligen Rollen in Kraftkontakt. Der Riemen erfährt somit nur Biegung in einer Richtung, was dessen Lebensdauer vergrössert. Im Gegensatz zur Ausführung nach Figuren 1 und 2, wo die Achse 9 einer der Rollen direkt, d.h. nicht über einen Riemen angetrieben wird, erfolgt in der Ausführung nach Figur 3 der Antrieb aller Rollen über Riemen.

Die Ausführungsform von Figur 4 entspricht der von Figur 3, nur sind der Riemen 3 und die angetriebene Achse 8 anders angeordnet bzw. ausgestaltet. Der Riemen 3 weist auf beiden Seiten eine Verzahnung auf. Er steht mit der angetriebenen Achse 8 über seine erste Seite in Kraftkontakt und mit den Rollenachsen 7 über seine zweite Seite. Der Riemen 3 erfährt dadurch bei der angetriebenen Achse 8 eine Gegenbiegung. Das verkürzt seine Lebensdauer. Dafür kann bei gleichem Platzbedarf ein längerer Kontaktweg mit dem angetriebenen Riemenrad erreicht werden.

Figur 5 zeigt eine Ausführungsform mit zwei Rollenpaaren und zwei Riemen. Die zusätzlich direkt angetriebene Achse 8 liegt seitlich der Rollenpaare.

Figur 6 zeigt eine Ausführungsform wie in Figur 5, jedoch durch ein zusätzliches Rollenpaar erweitert. Die zusätzliche Antriebsrolle 7 ist über einen weiteren Riemen mit einer anderen Antriebsrolle 7 antriebsverbunden.

Figur 7 zeigt eine Ausführungsform mit vier Rollenpaaren. Eine erste Antriebsrolle 5 mit Achse 9 wird direkt vom Motor 1 angetrieben. Die drei weiteren Antriebsrollen 5 sind mit der ersten Antriebsrolle 5 über drei Riemen 3 antriebsverbunden, wobei jeder Riemen jeweils zwei benachbarte Antriebsrollen 5 verbindet.

Figur 8 zeigt eine Ausführungsform, mit einem Gehäuse 10, welches die Achsen 7,9 trägt. Der Riemen 3 ist durch eine Trennwand 11 von den Rollen 5, 6 getrennt. Die Vorrichtung ist dadurch sicherer, weil die Antriebsverbindung so beim Einlegen des Drahtes abgeschlossen bleibt.

## Patentansprüche

1. Drahtvorschubvorrichtung für Drahtschweissanlagen, welche zum Antrieb des Schweissdrahtes (4) mindestens zwei Rollenpaare (5, 6) mit je zwei Rollen aufweist, zwischen welchen der Schweissdraht geführt ist, wobei jeweils mindestens eine Rolle (5) eines Rollenpaars mit einer von einem Motor (1) angetriebenen Achse (8, 9) antriebsverbunden ist, **dadurch gekennzeichnet, dass** die angetriebene Achse (8, 9) und mindestens eine Rolle (5) über einen Riemen (3) antriebsverbunden sind.

2. Drahtvorschubvorrichtung nach Anspruch 1 mit zwei, drei oder vier Rollenpaaren (5, 6).

3. Drahtvorschubvorrichtung nach einem der vorangehenden Ansprüche, wobei eine Rolle (5) direkt und nicht über den Riemen (3) vom Motor (1) angetrieben ist.

4. Drahtvorschubvorrichtung nach einem der Ansprüche 1 bis 2, die eine von den Rollenachsen (7) getrennte, zusätzliche vom Motor (1) direkt angetriebene Achse (8) aufweist.

5. Drahtvorschubvorrichtung nach Anspruch 4, so angeordnet, dass die zusätzliche vom Motor (1) direkt angetriebene Achse (8) sich zwischen den Rollenpaaren (5, 6) befindet.

6. Drahtvorschubvorrichtung nach Anspruch 5, wobei der Riemen (3) mit der angetriebenen Achse (8) und mit den Rollenachsen (7) über dieselbe Seite in Kraftkontakt steht.

7. Drahtvorschubvorrichtung nach Anspruch 5, wobei der Riemen (3) mit der angetriebenen Achse (8) über eine erste Seite und mit den Rollen (5) über eine zweite Seite in Kraftkontakt steht.

8. Drahtvorschubvorrichtung gemäss einem der vorangehenden Ansprüche, wobei der angetriebenen Achse (8,9) und der mindestens einen über einen Riemen (3) angetriebenen Rolle (5) Riemenräder (2) mit Verzahnung zugeordnet sind, und wobei mindestens eine Seite des Riemens (3) eine Verzahnung (12) aufweist, welche in die Verzahnung der Riemenräder (2) eingreift.

9. Drahtvorschubvorrichtung nach Anspruch 8, wobei die Riemenräder (2) aus Aluminium oder einer Aluminiumlegierung sind.

10. Drahtvorschubvorrichtung nach einem der vorangegangenen Ansprüche, wobei der Riemen (3) Trapezverzahnung (12) aufweist.

11. Drahtvorschubvorrichtung nach einem der vorangegangenen Ansprüche, wobei der Riemen (3) Polyurethan aufweist oder aus Polyurethan besteht.

12. Drahtvorschubvorrichtung nach einem der vorangegangenen Ansprüche, wobei der Riemen (3) durch Karbonfasern und/oder Metalleinlagen verstärkt ist.

13. Drahtvorschubvorrichtung nach einem der vorangegangenen Ansprüche mit einem Gehäuse (10, 11), welches die Achsen (7, 8, 9) trägt, insbesondere mit einer Trennwand (11) zwischen Riemen und Rollen.
